# EUROPEAN PATENT APPLICATION

(11) **EP 4 826 902 A1**
(43) Date of publication of application: **21.10.2026**
(21) Application number: 26160668.5
(22) Date of filing: 25.02.2026
(51) Int. Cl.: H01M 50/60, H01M 10/04, H01M 10/48, H01M 50/317, H01M 50/636

(54) **RECHARGEABLE BATTERY AND RECHARGEABLE BATTERY ELECTROLYTE INLET OPENING AND CLOSING SYSTEM**

(30) Priority: 27.03.2025 KR 20250039810
(71) Applicant: SAMSUNG SDI CO., LTD., Yongin-si, Gyeonggi-do 17084 (KR)
(72) Inventor: MOON, Taewon, Yongin-si, 17084 (KR)
(74) Representative: Maiwald GmbH

(57) **Abstract**

A rechargeable battery includes: an electrode assembly; a case accommodating the electrode assembly and including an opening; a cap plate covering the opening of the case and including an electrolyte inlet; and a blocking member including a ball adjacent to the electrolyte inlet on one surface of the cap plate and configured to open and close the electrolyte inlet, and a valve connected to the ball.

## Description

### BACKGROUND

### 1. Field

Aspects of some embodiments of the present disclosure relate to a rechargeable battery and a rechargeable battery electrolyte inlet opening and closing system.

### 2. Description of the Related Art

A rechargeable battery is a battery capable of repeatedly being charged and discharged, and with the development of information communication and display industries, rechargeable batteries may be relatively widely applied as power sources for portable electronic communication devices such as camcorders, mobile phones, and laptop PCs. Furthermore, recently, battery packs including rechargeable batteries have been developed and applied as power sources for eco-friendly vehicles.

During charging/discharging and storage of the rechargeable battery, micro gas may be generated inside the case accommodating the electrode assembly of the rechargeable battery. For instance, micro gas may be generated by chemical reactions in the electrolyte included in the electrode assembly. In case that the generation amount of micro gas increases excessively, the pressure inside the case may increase, and the cell life of the rechargeable battery cell may deteriorate. Furthermore, there is a risk of fire and the like due to the micro gas physically contacting the electrode assembly. Therefore, a design capable of controlling the amount of micro gas inside the case may be desirable.

The above information disclosed in this Background section is only for enhancement of understanding of the background and therefore the information discussed in this Background section does not necessarily constitute prior art.

### SUMMARY

Aspects of some embodiments of the present disclosure include a rechargeable battery that may be capable of controlling pressure inside a case.

Aspects of some embodiments of the present disclosure include a system that may be capable of opening and closing a rechargeable battery electrolyte inlet according to pressure inside a case.

However, the characteristics of embodiments according to the present disclosure are not limited to the above-mentioned characteristics, and other characteristics not mentioned may be more clearly understood by those skilled in the art from the description of the disclosure described below.

A rechargeable battery according to an aspect of the present disclosure for solving the technical problems includes an electrode assembly, a case accommodating the electrode assembly and including an opening, a cap plate covering the opening of the case and including an electrolyte inlet, and a blocking member including a ball adjacent to the electrolyte inlet on one surface of the cap plate and configured to open and close the electrolyte inlet, and a valve connected to the ball.

According to some embodiments, the valve may be a solenoid valve.

According to some embodiments, the solenoid valve may include a plunger and a solenoid coil surrounding the plunger, and the plunger may be connected to the ball.

According to some embodiments, the rechargeable battery may include a current supply member.

According to some embodiments, the rechargeable battery may include a measurement member for measuring pressure inside the rechargeable battery.

According to some embodiments, the measurement member may be a pressure sensor positioned inside the rechargeable battery.

According to some embodiments, the measurement member may be a Battery Management System (BMS).

According to some embodiments, the pressure at which the blocking member reversibly opens the electrolyte inlet may be 4 kgf/cm² or more.

According to some embodiments, the electrolyte inlet may be reversibly opened in case that the current supply member applies current to the solenoid valve.

According to some embodiments, the pressure at which the blocking member non-forcibly opens the electrolyte inlet may be 4 kgf/cm² to 20 kgf/cm².

According to some embodiments, the pressure at which the blocking member forcibly opens the electrolyte inlet may be greater than 20 kgf/cm².

According to some embodiments, the pressure at which the blocking member reversibly closes the electrolyte inlet may be less than 4 kgf/cm².

According to some embodiments, the current supply member may not apply current to the solenoid valve.

According to some embodiments, the current supply member may apply current to the solenoid valve.

According to some embodiments, the case may have a hexahedral shape.

A rechargeable battery electrolyte inlet opening and closing system according to an aspect includes a rechargeable battery including a blocking member that opens and closes an electrolyte inlet through a solenoid valve, a measurement member that measures pressure inside the rechargeable battery, and a current supply member that is connected to the blocking member and applies current to the solenoid valve according to the pressure measured by the measurement member.

According to some embodiments, the measurement member may be a battery management system.

According to some embodiments, the measurement member may be a pressure sensor positioned inside the rechargeable battery, and the pressure measured by the pressure sensor may be controlled by a battery management system.

According to some embodiments, the blocking member may reversibly open the electrolyte inlet at a pressure of 4 kgf/cm² or more.

According to some embodiments, the blocking member may reversibly close the electrolyte inlet at a pressure of less than 4 kgf/cm².

According to some embodiments of the present disclosure, the pressure inside the case in which the electrode assembly is accommodated may be controlled. Accordingly, corrosion of internal components of the case due to micro gas inside the case may be prevented or reduced, and the fire risk may be relatively reduced by relatively reducing physical contact between the micro gas and the electrode assembly. Therefore, the life characteristics and stability of the rechargeable battery may be relatively improved.

### BRIEF DESCRIPTION OF THE DRAWINGS

The following drawings attached to this specification illustrate aspects of some embodiments of the present disclosure and serve to further understand the scope of embodiments according to the present disclosure together with the detailed description of the disclosure described below, so the present disclosure should not be interpreted as being limited only to the matters described in such drawings.
FIG. 1 is a schematic perspective view of a rechargeable battery according to some embodiments.
FIG. 2 is a schematic cross-sectional view of a rechargeable battery according to some embodiments.
FIGS. 3 and 4 are enlarged views of a solenoid valve portion of a rechargeable battery according to some embodiments.
FIG. 5 is a flowchart showing an electrolyte inlet opening process according to some embodiments.
FIG. 6 is a schematic block diagram showing an opening and closing system for an electrolyte inlet of a rechargeable battery according to some embodiments.

### DETAILED DESCRIPTION

Hereinafter, aspects of some embodiments of the present disclosure will be described in detail with reference to the accompanying drawings.

In addition, as used in this specification, "comprise, include" and/or "comprising, including" specify the presence of the mentioned shapes, numbers, steps, operations, members, elements and/or groups thereof, and do not exclude the presence or addition of one or more other shapes, numbers, steps, operations, members, elements and/or groups.

In addition, to help understand the disclosure, the accompanying drawings are not drawn to actual scale, but the dimensions of some components may be exaggerated. In addition, the same reference numbers may be assigned to the same components in different embodiments.

A reference to two comparison subjects being 'identical' means 'substantially identical'. Therefore, substantial identity may include cases having deviations considered low-level in the art, for instance, deviations in 5%. In addition, that a parameter is uniform in a region (e.g., a set or predetermined region) may mean that it is uniform from an average perspective.

Although first, second, or the like are used to describe various components, it goes without saying that these components are not limited by these terms. These terms are merely used to distinguish one component from another, and unless specifically stated to the contrary, the first component may of course be the second component.

Throughout the specification, unless specifically stated to the contrary, each component may be singular or plural.

That an arbitrary configuration is located "above (or below)" a component or "on (or under)" a component may mean that not only is the arbitrary configuration located in contact with the upper surface (or lower surface) of the component, but also that another configuration may be interposed between the component and the arbitrary configuration located on (or under) the component.

In addition, in case that a component is described as being "on", "connected to", or "coupled to" another component, the components may be directly connected to or connected to each other, but it should be understood that other components may be "interposed" between each component, or each component may be "connected", "coupled" or "in contact with" through other components.

As used herein, the term "and/or" includes any and all combinations of one or more of the associated listed items. In addition, the use of "may" describing embodiments of the present disclosure relates to "one or more embodiments of the present disclosure." Expressions such as "one or more" and "one or more" before a list of elements modify the entire list of elements and do not modify individual elements of the list.

Throughout the specification, referring to "A and/or B", this means A, B, or A and B unless specifically stated to the contrary, and referring to "C to D", this means C or more and D or less unless specifically stated to the contrary.

Phrases such as "at least one of A, B and C", "at least one of A, B or C", "at least one selected from the group of A, B and C" or "at least one selected from A, B and C" are used to specify a list of elements A, B and C, the phrase may refer to any and all suitable combinations.

The term "use" may be considered synonymous with the term "utilize". As used herein, "substantially", "about" and similar terms are used as terms of approximation rather than terms of degree, and are intended to account for inherent variations in measured or calculated values that would be recognized by a person of ordinary skill in the art.

Although terms such as first, second, third, or the like may be used herein to describe various elements, components, regions, layers and/or sections, these elements, components, regions, layers and/or sections should not be limited by these terms. These terms are used to distinguish one element, component, region, drawing layer or section from another element, component, region, drawing layer or section. Accordingly, a first element, component, region, layer or section discussed below may be termed a second element, component, region, layer or section without departing from the teachings of embodiments.

Spatially relative terms such as "beneath", "below", "lower", "above", "upper" and the like may be used herein for ease of description to describe the relationship of one element or feature to other element(s) or feature(s) as shown in the drawings. It will be understood that spatially relative positions are intended to encompass different orientations of the device in use or operation in addition to the orientations depicted in the figures. For instance, if the device in the figures is turned over, elements described as "below" or "beneath" other elements would then be oriented "above" or "upper" to the other elements. Thus, the term "below" encompasses both above and below orientations.

The terms used herein are for describing embodiments of the present disclosure and are not intended to limit the present disclosure.

In embodiments of prismatic batteries according to some embodiments of the present disclosure, one of prismatic/pouch/cylindrical batteries is selected and the selected battery is described as having a general structure, and in the case of generally applied technology, the general structure of prismatic/pouch/cylindrical batteries is described.

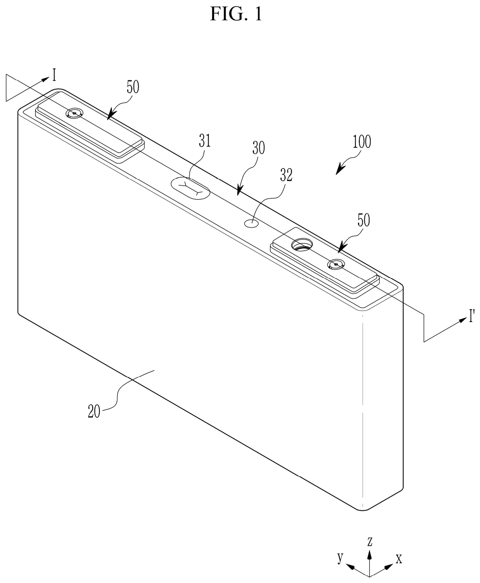

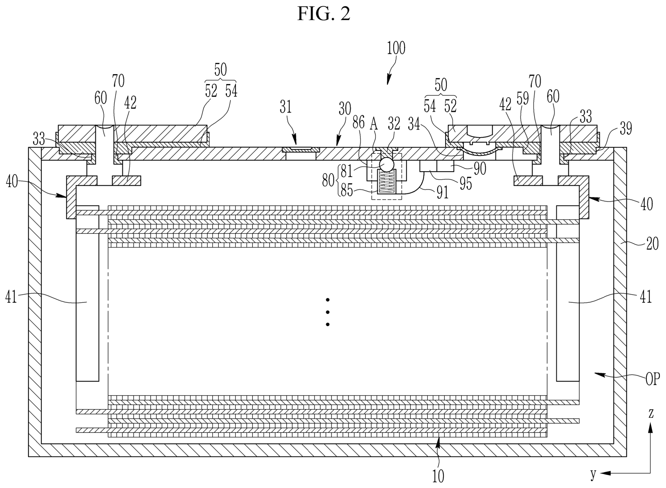

FIG. 1 is a schematic perspective view of a rechargeable battery according to some embodiments. FIG. 2 is a schematic cross-sectional view of a rechargeable battery according to some embodiments. FIG. 2 is a cross-sectional view taken along the line I-I' of FIG. 1.

Referring to FIGS. 1 and 2, a rechargeable battery 100 may include an electrode assembly 10 including a first electrode and a second electrode, a case 20 accommodating the electrode assembly 10 and having an opening OP, and a cap plate 30 covering the opening OP of the case 20 while being coupled to the case 20.

The rechargeable battery 100 may be used as an energy source for devices operating using electrical energy, such as hybrid electric vehicles (HEV), electric vehicles (EV), wireless vacuum cleaners, electric bicycles, electric scooters, and the like.

The electrode assembly 10 may be formed by winding or stacking a laminate of first electrode, separator, and second electrode, each shaped as a thin plate or layer. In case that the electrode assembly 10 is a wound laminate, the winding axis may be parallel to the second direction (y) of the case 20. In addition, the electrode assembly 10 may be a stack type rather than a wound type, and the shape of the electrode assembly 10 is not limited in the present disclosure. In addition, the electrode assembly 10 may be a Z-stack electrode assembly 10 in which first and second electrodes are inserted into both sides of a separator bent in a Z-stack. In addition, the electrode assembly 10 may be accommodated inside the case 20 by stacking one or more electrode assemblies 10 so that their long sides are adjacent to each other, and the number of electrode assemblies 10 is not limited in the present disclosure. The first electrode of the electrode assembly 10 may serve as a negative electrode, and the second electrode may serve as a positive electrode. Of course, the opposite is also possible.

The first electrode may be formed by coating a first electrode active material such as graphite or carbon onto a first electrode current collector formed of a metal foil such as copper, copper alloy, nickel, or nickel alloy, and may include a first electrode tab (or first uncoated portion) which is a region where the first electrode active material is not applied. The first electrode tab may serve as a current path between the first electrode and the first current collector. In some embodiments, the first electrode tab may be formed to protrude toward one side during manufacturing of the first electrode, and without separate cutting, may protrude further than the separator toward that side.

The second electrode may be formed by coating a second electrode active material, such as transition metal oxide, onto a second electrode current collector formed of a metal foil such as aluminum or aluminum alloy, and may include a second electrode tab (or second uncoated portion), which is a region where the second electrode active material is not applied. The second electrode tab may serve as a passage for current flow between the second electrode and the second current collector. According to some embodiments, the second electrode tab may be formed to protrude from the other side during manufacturing of the second electrode, and without separate cutting, may protrude further than the separator toward the other side.

The separator is interposed between the first electrode and the second electrode, and may prevent short circuits and enable movement of lithium ions. For instance, the separator may be formed of polyethylene, polypropylene, or composite layers thereof.

According to some embodiments, the first electrode tab may be positioned on the left end side of the electrode assembly 10, and the second electrode tab may be positioned on the right end side of the electrode assembly 10, or both electrode tabs may be positioned on the same surface in the same direction. Here, left and right are for convenience of description based on the rechargeable battery 100 shown in FIGS. 1 and 2, and the positions may change in case that the rechargeable battery 100 is rotated horizontally or vertically.

The first electrode tab of the first electrode and the second electrode tab of the second electrode are respectively positioned at both ends of the electrode assembly 10 as described above. According to some embodiments, the electrode assembly may be accommodated in a case together with an electrolyte. In addition, the electrode assembly has first and second current collectors respectively welded and connected to the first electrode tab of the first electrode and the second electrode tab of the second electrode exposed on both sides.

The electrode assembly 10 may be inserted into the case 20 through the opening OP in a direction where the winding axis is parallel (or approximately parallel) to the second direction (y) of the case 20, and the electrode assembly 10 may be mounted together with electrolyte inside the case 20. The electrolyte may include an organic solvent and a lithium salt. The organic solvent may include ethyl carbonate (EC), poly carbonate (PC), diethyl carbonate (DEC), ethyl methyl carbonate (EMC), dimethyl carbonate (DMC), and the like. The lithium salt may include LiPF6, LiBF4, and the like. The electrolyte may be liquid, solid, or gel.

The case 20 may have a hexahedral shape with an internal space. For instance, the case 20 may have a rectangular (or an approximately rectangular) parallelepiped shape to have a space for accommodating the electrode assembly 10 and electrolyte therein. The electrode assembly 10 may be inserted into the case 20 through the opening OP. The case 20 may be formed of a metal such as aluminum or stainless steel. The case 20 may be electrically connected to at least one of the first electrode or the second electrode.

The cap plate 30 may be coupled to one open surface of the case 20. The cap plate 30 may have a shape corresponding to the formation of the open surface of the case 20. For instance, in case that the case 20 has a rectangular (or an approximately rectangular) parallelepiped shape, the cap plate 30 may have a plate shape extending long in one direction. The cap plate 30 may be formed of the same material as the case 20 and may be coupled to the case 20 by laser welding or the like. The cap plate 30 may be electrically connected to the case 20, and in case that the case 20 is electrically connected to the first electrode or the second electrode of the electrode assembly 10, the cap plate 30 may have the same polarity as the case 20.

The cap plate 30 may include an electrolyte inlet 32 for injecting electrolyte, a vent hole 31, a short-circuit hole 34, a terminal hole 33 into which the pillar 60 is inserted, and a blocking member 80. A vent plate with a notch formed therein may be positioned in the vent hole 31 so as to be opened at a set opening pressure. A short-circuit member that short-circuits the rechargeable battery 100 at a set operating pressure may be positioned in the short-circuit hole 34. The blocking member 80 may include a ball 81 capable of closing the electrolyte inlet 32 and a valve 85 connected to the ball 81.

The vent hole 31 may be sealed with a vent plate formed in the vent hole 31. In case that the internal pressure of the case 20 exceeds a set pressure, the vent hole 31 may be opened according to the notch of the vent plate. Accordingly, in case that the internal pressure of the case 20 exceeds the set pressure, the vent hole 31 may be irreversibly opened.

The electrolyte inlet 32 may have a circular or polygonal cross-sectional shape. An electrolyte injection nozzle may be inserted into the electrolyte inlet 32. The size of the electrolyte inlet 32 is not limited as long as the strength of the cap plate 30 is not excessively deteriorated. After the cap plate 30 is coupled to the case 20, electrolyte may be injected into the case 20 through the electrolyte inlet 32. After the electrolyte is injected, the electrolyte inlet 32 may be sealed through the blocking member 80.

A short-circuit member may be formed in the short-circuit hole 34. The short-circuit member may include a curved portion bent toward the electrode assembly 10 in case that the internal pressure of the case 20 is normal and a rim portion positioned outside the curved portion and fixed to the sidewall of the short-circuit hole 34.

In case that gas is generated inside the rechargeable battery 100, the internal pressure of the rechargeable battery 100 may increase. The short-circuit member is electrically connected to the cap plate 30, and in case that the internal pressure of the rechargeable battery 100 or the case 20 becomes higher than a set pressure, the curved portion of the short-circuit member may be deformed so that the convex direction moves away from the electrode assembly 10. The short-circuit member with the deformed curved portion may contact the terminal 50 to cause a short circuit. Accordingly, additional abnormal reactions of the rechargeable battery 100 may not proceed, and explosion due to internal pressure increase may be prevented.

The terminal hole 33 may be penetrated by the pillar 60 for electrically connecting the terminal 50 and the electrode assembly 10. That is, the pillar 60 may extend through the terminal hole 33 to electrically connect the terminal 50 to the electrode assembly 10. A gasket 70 for sealing the interior of the case 20 may be positioned between the inner surface of the terminal hole 33 and the pillar 60.

The terminal 50 may be located on the cap plate 30. The terminal 50 may include a first terminal that may be electrically connected to the first electrode of the electrode assembly 10 and a second terminal that may be electrically connected to the second electrode. The terminal 50 may have a rectangular plate shape. The terminal 50 may be coupled to the pillar 60 penetrating the terminal hole 33 to be electrically connected to the electrode assembly 10, and the terminal 50 may be formed in an electrically conducting state with the cap plate 30.

An insulating plate 54 may be positioned between the cap plate 30 and the terminal 50. The insulating plate 54 may electrically insulate the terminal 50 and the cap plate 30. The terminal plate 52 of the terminal 50 may be coupled to the pillar 60 so that the terminal 50 and the electrode assembly 10 are electrically connected. For instance, the pillar 60 may penetrate the cap plate 30 to electrically connect the terminal 50 and the electrode assembly 10.

The terminal 50 may further include a protrusion protruding toward the short-circuit member in a region facing the short-circuit member, so that contact and short-circuit with the short-circuit member may be facilitated in case that the curved portion of the short-circuit member is deformed to move away from the electrode assembly 10. The terminal 50 may be spaced apart from the short-circuit member before the curved portion of the short-circuit member is deformed.

The terminal 50 may be connected to a connection terminal of an external device requiring electrical energy, or to a bus bar that connects each terminal 50 of a plurality of rechargeable batteries 100. In case that the terminal 50 is connected to a connection terminal or bus bar, the terminal 50 may physically contact the connection terminal or bus bar by temporary coupling or permanent coupling such as welding.

The pillar 60 may penetrate the terminal hole 33 and extend from the inside to the outside of the case 20. The cross-sectional shape of the pillar 60 and the cross-sectional shape of the terminal hole 33 may have various shapes such as circular or polygonal.

"Cross-sectional shape" in the present disclosure refers to the shape of a cross-section in a direction parallel to a plane defined by the first direction (x) and the second direction (y).

The gasket 70 may seal the terminal hole 33 through which the pillar 60 is inserted. The gasket 70 may have a shape surrounding the pillar 60. The gasket 70 may include an elastic material such as silicone or epoxy, and the cross-sectional shape of the gasket 70 may correspond to the cross-sectional shapes of the terminal hole 33 and the pillar 60.

The rechargeable battery 100 may further include a current collecting member 40 having one side 41 coupled to the electrode assembly 10 and the other side 42 coupled to the pillar 60. The current collecting member 40 may have one side 41 coupled to the uncoated portion of the electrode assembly 10 and the other side 42 coupled to the pillar 60. The shape of the current collecting member 40 is not limited, and may have a bent shape depending on the positions of the uncoated portion of the electrode assembly 10 and the pillar 60.

The blocking member 80 may contact the electrolyte inlet 32 inside the case 20 to seal the electrolyte inlet 32. The blocking member 80 may be located adjacent to the electrolyte inlet 32 on one surface of the cap plate 30 through the support member 86. For instance, the support member 86 may be connected together with one surface of the cap plate 30 and the blocking member 80 to fix the blocking member 80 to one surface of the cap plate 30.

The blocking member 80 may include a ball 81 that closes the electrolyte inlet 32 and a valve 85 connected to the ball 81. The ball 81 may contact and separate from the electrolyte inlet 32 to close and open the electrolyte inlet 32. The ball 81 may have a cross-sectional shape corresponding to the electrolyte inlet 32. The valve 85 may move the ball 81 so that the ball 81 may contact and separate from the electrolyte inlet 32. The valve 85 may include a solenoid valve. Accordingly, the valve 85 may be precisely controlled through current to control the movement of the ball 81 to quickly contact and separate from the electrolyte inlet 32.

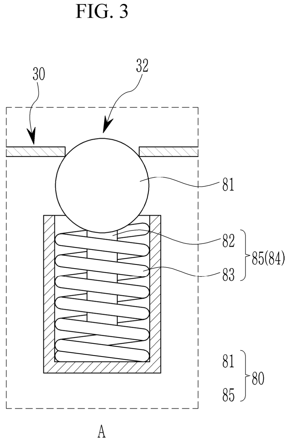

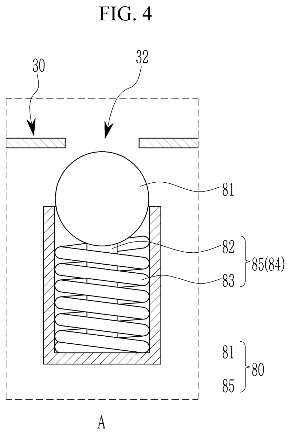

FIGS. 3 and 4 are enlarged views of a solenoid valve portion of a rechargeable battery according to some embodiments. FIG. 3 is an enlarged view of area A of FIG. 2 in case that current is not supplied to the valve. FIG. 4 is an enlarged view of area A of FIG. 2 in case that current is supplied to the valve.

Referring to FIGS. 1 to 4, the valve 85 including the solenoid valve 84 may include a plunger 82 and a solenoid coil 83 surrounding the plunger 82. The plunger 82 may be connected to the ball 81 to control the movement of the ball 81.

The rechargeable battery 100 may include a current supply member 90. The solenoid coil 83 may be connected to the current supply member 90 positioned inside the case 20. The current supply member 90 may supply current to the solenoid coil 83 according to the pressure inside the case 20. The current supply member 90 may be coupled to the cap plate 30.

The current supply member 90 may be connected to the solenoid coil 83 through a connection member 91. The connection member 91 may be, for instance, a conductor with an insulated surface. The current supply member 90 may transmit a portion of the current generated in the rechargeable battery 100 to the solenoid coil 83 through the connection member 91 under control of a Battery Management System (BMS). Accordingly, current may be supplied to the valve 85 through the current supply member 90.

FIG. 2 shows a case where the current supply member 90 is positioned inside the case 20, however, the current supply member 90 may be positioned outside the rechargeable battery 100. The current supply member 90 may be a power supply device separately positioned outside the rechargeable battery 100, and the power supply device separately positioned outside the rechargeable battery 100 may be connected to the solenoid coil 83 through a conductor. For instance, a hole for inserting a conductor may be formed in the cap plate 30 of the rechargeable battery 100, and a conductor with an insulated surface may be connected to the solenoid coil 83 inside the case 20 through the hole. The hole for inserting the conductor may be coated with an insulating material. Accordingly, the battery management system may control the power supply device separately positioned outside the rechargeable battery 100 to supply current to the valve 85 through the conductor of the power supply device.

The rechargeable battery 100 may include a measurement member 95. The measurement member 95 may measure the internal pressure of the rechargeable battery 100. The electrolyte positioned inside the case 20 may cause side reactions as charging and discharging of the rechargeable battery 100 are repeated. In case that side reactions occur, gas may be generated inside the case 20, and the pressure inside the case 20 may change due to the gas. The measurement member 95 may measure the pressure inside the rechargeable battery 100 that changes due to the gas.

The measurement member 95 may be a pressure sensor positioned inside the rechargeable battery 100. The pressure sensor positioned inside the rechargeable battery 100 as the measurement member 95 may directly measure the pressure inside the case 20. Pressure data measured by the pressure sensor positioned inside the rechargeable battery 100 as the measurement member 95 may be transmitted to the battery management system. The battery management system may control whether to supply current from the current supply member 90 according to the pressure received from the pressure sensor.

FIG. 2 shows a case where a pressure sensor is positioned inside the rechargeable battery 100 as the measurement member 95. However, the measurement member 95 may be positioned outside the rechargeable battery 100. The rechargeable battery 100 may be directly connected to a battery management system, and the battery management system may be utilized as the measurement member 95. For instance, the rechargeable battery 100 may be connected remotely or by wire to a battery management system utilized as the measurement member 95, so that the battery management system may measure the pressure inside the case 20 of the rechargeable battery 100. The battery management system may control whether to supply current from the current supply member 90 according to the pressure measured by the battery management system.

As described above, the measurement member 95 positioned inside or outside the rechargeable battery 100 may measure the pressure inside the case 20 of the rechargeable battery 100, and the battery management system may control whether to supply current from the current supply member 90. In case that the internal pressure of the rechargeable battery 100 measured by the measurement member 95 is measured to be above the discharge pressure, the battery management system may control the current supply member 90 to generate current from the current supply member 90. The solenoid coil 83 may receive current generated from the current supply member 90 and move the plunger 82 and the ball 81 connected to the plunger 82 to be spaced apart from the electrolyte inlet 32.

The magnitude of the electromagnetic force generated in the solenoid coil 83 may be controlled according to the intensity of the current, and accordingly, the degree to which the plunger 82 and the ball 81 connected to the plunger 82 are spaced apart from the electrolyte inlet 32 may be controlled.

Referring to FIG. 3, in the event that current is not supplied to the solenoid coil 83, the ball 81 and the plunger 82 connected to the ball 81 may float toward the electrolyte inlet 32 due to buoyancy by the electrolyte filled inside the case 20. Accordingly, the ball 81 may contact the electrolyte inlet 32 to seal the electrolyte inlet 32, and may suppress the gas inside the case 20 from being released to the outside.

Referring to FIG. 4, in case that current is supplied to the solenoid coil 83, electromagnetic force may be generated inside the solenoid coil 83 where the plunger 82 is positioned. By the electromagnetic force generated in case that current is supplied to the solenoid coil 83, a force in the direction from the electrolyte inlet 32 toward the inside of the case 20 (for instance, the direction opposite to the third direction (z)) may be generated on the plunger 82. Accordingly, the plunger 82 may overcome the buoyancy by the electrolyte filled inside the case 20 and move from the electrolyte inlet 32 toward the inside of the case 20. The ball 81 connected to the plunger 82 may move together with the plunger 82 from the electrolyte inlet 32 toward the inside of the case 20. Therefore, the electrolyte inlet 32 may be opened, and the gas inside the case 20 may be released to the outside of the case 20.

Hereinafter, the opening and closing process of the electrolyte inlet 32 of the rechargeable battery 100 according to specific pressure inside the case 20 of the rechargeable battery 100 according to some embodiments will be described in more detail.

In case that the pressure measured by the measurement member 95 is less than 4 kgf/cm², the battery management system may control the current supply member 90 to not generate current or to generate only weak current. The pressure measured by the measurement member 95 at which the blocking member 80 reversibly closes the electrolyte inlet 32 may be less than 4 kgf/cm². In case that the current supply member 90 does not apply current to the solenoid valve 84 or applies weak current to the solenoid valve 84, the electrolyte inlet 32 may be reversibly closed.

For instance, in case that the current supply member 90 does not generate current, the current supply member 90 may not apply current to the solenoid coil 83. The solenoid coil 83 may not receive current, so electromagnetic force may not be generated inside the solenoid coil 83. Therefore, the plunger 82 and the ball 81 connected to the plunger 82 may not move, and the electrolyte inlet 32 may be reversibly closed by the blocking member 80.

For instance, in case that the current supply member 90 generates only weak current, the current supply member 90 may apply current to the solenoid coil 83. Weak current is supplied to the solenoid coil 83, so weak electromagnetic force may be generated inside the solenoid coil 83. However, even if weak electromagnetic force is generated inside the solenoid coil 83, the plunger 82 and the ball 81 connected to the plunger 82 may not overcome the buoyancy by the electrolyte filled inside the case 20 and may not move so as to be spaced apart from the electrolyte inlet 32. Therefore, the plunger 82 and the ball 81 connected to the plunger 82 may not move, and the electrolyte inlet 32 may be reversibly closed by the blocking member 80.

In case that the pressure measured by the measurement member 95 is 4 kgf/cm² or more, the battery management system may control the current supply member 90 so as to generate current. The pressure measured by the measurement member 95 at which the blocking member 80 reversibly opens the electrolyte inlet 32 may be 4 kgf/cm² or more. In case that the current supply member 90 applies current to the solenoid valve 84, the electrolyte inlet 32 may be reversibly opened.

For instance, in case that the current supply member 90 generates current, the current supply member 90 may apply current to the solenoid coil 83. Current is supplied to the solenoid coil 83, so electromagnetic force may be generated inside the solenoid coil 83. The electromagnetic force generated inside the solenoid coil 83 may be greater than the buoyancy by the electrolyte filled inside the case 20. Accordingly, the plunger 82 and the ball 81 connected to the plunger 82 may overcome the buoyancy and move to be spaced apart from the electrolyte inlet 32. Therefore, the electrolyte inlet 32 may be reversibly opened by the blocking member 80.

The pressure measured by the measurement member 95 at which the blocking member 80 non-forcibly opens the electrolyte inlet 32 may be 4 kgf/cm² to 20 kgf/cm². For instance, in case that the pressure measured by the measurement member 95 is 4 kgf/cm² to 20 kgf/cm², the battery management system may control the current supply member 90 to generate current in proportion to the measured pressure. Accordingly, current generated in proportion to the measured pressure is supplied to the solenoid coil 83 to generate electromagnetic force proportional to the measured pressure. Therefore, according to the buoyancy applied to the plunger 82 and the ball 81 connected to the plunger 82, the plunger 82 and the ball 81 connected to the plunger 82 may be non-forcibly spaced apart from the electrolyte inlet 32. For instance, in case that gas dissolved in the electrolyte increases and buoyancy is weak, the blocking member 80 may close the electrolyte inlet 32, and in case that gas dissolved in the electrolyte decreases and buoyancy is strong, the blocking member 80 may open the electrolyte inlet 32.

As the frequency at which the blocking member 80 opens the electrolyte inlet 32 increases, electrolyte may be released to the outside of the case 20, and foreign substances may penetrate into the case 20. Fire risk may increase due to electrolyte released to the outside, and the life characteristics of the rechargeable battery 100 may deteriorate due to foreign substances penetrating into the interior. Even if the pressure inside the case 20 increases, by considering the buoyancy of the electrolyte and non-forcibly opening the blocking member 80, the stability and life characteristics of the rechargeable battery 100 may be relatively improved.

The pressure measured by the measurement member 95 at which the blocking member 80 forcibly opens the electrolyte inlet 32 may be greater than 20 kgf/cm². For instance, in case that the pressure measured by the measurement member 95 is greater than 20 kgf/cm², the battery management system may control the current supply member 90 to generate strong current. Accordingly, strong current is supplied to the solenoid coil 83 to generate strong electromagnetic force. Therefore, the plunger 82 and the ball 81 connected to the plunger 82 may be forcibly opened regardless of the buoyancy acting on the plunger 82 and the ball 81 connected to the plunger 82.

Accordingly, gas generated inside the case 20 of the rechargeable battery 100 may be forcibly released to prevent the rechargeable battery 100 from exploding. In addition, in case that the gas inside the case 20 decreases and the pressure decreases, the blocking member 80 may close the electrolyte inlet 32 again. Therefore, after the vent hole 31 is irreversibly opened, but before the life of the rechargeable battery 100 ends, the internal pressure of the case 20 may be controlled through the reversibly opened blocking member 80 to relatively improve the life characteristics of the rechargeable battery 100.

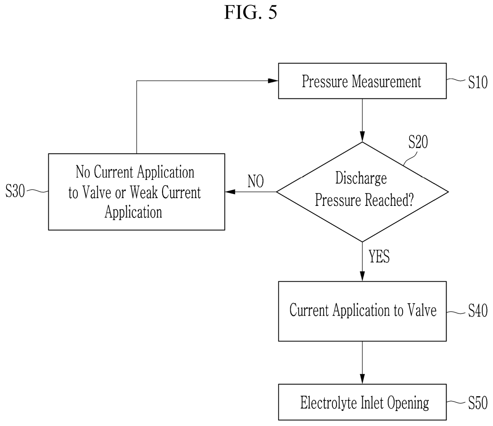

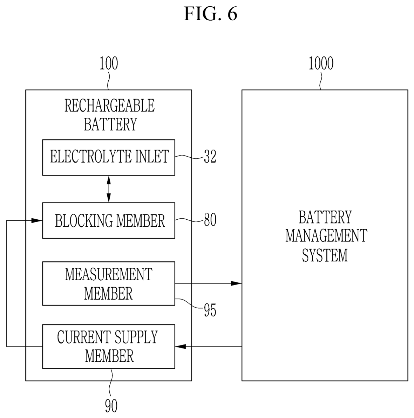

FIG. 5 is a flowchart showing an electrolyte inlet opening process according to some embodiments. FIG. 6 is a schematic block diagram showing a rechargeable battery electrolyte inlet opening and closing system according to some embodiments.

Referring to FIGS. 5 and 6, the rechargeable battery electrolyte inlet opening and closing system may include a rechargeable battery 100 including a blocking member 80, a current supply member 90, and a measurement member 95. The blocking member 80 may open and close the electrolyte inlet 32 through a solenoid valve. The current supply member 90 is connected to the blocking member 80 and may apply current to the solenoid valve according to pressure measured by the measurement member 95. The measurement member 95 may measure pressure inside the rechargeable battery 100. In FIG. 6, the current supply member 90 and the measurement member 95 are shown as being positioned inside the rechargeable battery 100, but as described above with reference to FIGS. 1 to 4, the current supply member 90 and the measurement member 95 may be positioned outside the rechargeable battery 100. For instance, the current supply member 90 may be a power supply device separately positioned outside the rechargeable battery 100, and the measurement member 95 may be a battery management system 1000 positioned separately from the rechargeable battery 100.

The pressure inside the rechargeable battery 100 may be measured (for instance, step S10). The measurement member 95 positioned inside or outside the rechargeable battery 100 may measure the pressure inside the case 20 of the rechargeable battery 100. The measurement member 95 may be a pressure sensor positioned inside the case 20 of the rechargeable battery 100, and the pressure measured by the pressure sensor may be determined and controlled by the battery management system 1000. The measurement member 95 may be the battery management system 1000, and the battery management system 1000 as the measurement member 95 may directly measure, determine, and control the pressure.

Whether the internal pressure of the case of the rechargeable battery 100 measured by the measurement member 95 has reached the discharge pressure may be determined (for instance, step S20). According to whether the discharge pressure is reached, the current supply member 90 may not apply current to the valve or may apply a constant current according to the pressure. "Discharge pressure" may mean pressure at which the risk of explosion and the like increases due to pressure rise by gas and the like inside the case of the rechargeable battery 100. For instance, the discharge pressure may be in the range of 4 kgf/cm² to 20 kgf/cm².

In case that the internal pressure measured by the measurement member 95 has not reached the discharge pressure, the battery management system may control the current supply member 90 to not apply current to the valve or to apply weak current (for instance, step S30). In case that current is not applied to a valve such as a solenoid valve or only weak current is applied, sufficient electromagnetic force is not generated, so the blocking member 80 may close the electrolyte inlet 32 by the buoyancy of the electrolyte. For instance, the blocking member 80 may reversibly close the electrolyte inlet 32 at a pressure of less than 4 kgf/cm². In this case, the measurement member 95 may measure the internal pressure of the case of the rechargeable battery 100 again.

In case that the internal pressure measured by the measurement member 95 has reached the discharge pressure, the battery management system may control the current supply member 90 to apply current to the valve 85 (for instance, step S40). For instance, in case that the pressure measured by the measurement member 95 is 4 kgf/cm² or more, the current supply member 90 may apply current to the valve 85.

In case that current is applied to the valve 85 from the current supply member 90, the electrolyte inlet 32 may be opened (for instance, step S50). In case that the current supply member 90 applies current to a valve 85 such as a solenoid valve 84, electromagnetic force is generated in the valve 85, so the blocking member 80 including the ball 81 and the valve 85 may overcome the buoyancy by the electrolyte and move. Accordingly, the blocking member 80 may be spaced apart from the electrolyte inlet 32 to open the electrolyte inlet 32. For instance, the blocking member 80 may reversibly open the electrolyte inlet at a pressure of 4 kgf/cm² or more.

Although aspects of some embodiments of the present disclosure have been described in detail above, the scope of embodiments according to the present disclosure is not limited thereto, and various modifications and improvements by those skilled in the art using the basic concept of embodiments according to the present disclosure defined in the following claims, and their equivalents, also belong to the scope of rights of the present disclosure.

### Description of Some of the Reference Symbols

| | | | |
|---|---|---|---|
| 10: | electrode assembly | 20: | case |
| 30: | cap plate | 32: | electrolyte inlet |
| 80: | blocking member | 81: | ball |
| 82: | plunger | 83: | solenoid coil |
| 84: | solenoid valve | 85: | valve |
| 86: | support member | 90: | current supply member |
| 91: | connection member | 95: | measurement member |
| 100: | rechargeable battery (100) | | |

## Claims

1. A rechargeable battery (100) comprising:
an electrode assembly (10);
a case (20) accommodating the electrode assembly (10) and including an opening;
a cap plate (30) covering the opening of the case (20) and including an electrolyte inlet (32); and
a blocking member (80) including a ball (81) adjacent to the electrolyte inlet (32) on one surface of the cap plate (30) and configured to open and close the electrolyte inlet (32), and a valve (85) connected to the ball (81).

2. The rechargeable battery (100) as claimed in claim 1, wherein the valve (85) is a solenoid valve (84, 85).

3. The rechargeable battery (100) as claimed in claim 2, wherein:
the solenoid valve (84, 85) includes a plunger (82) and a solenoid coil (83) surrounding the plunger (82); and
the plunger (82) is connected to the ball (81).

4. The rechargeable battery (100) as claimed in claim 2 or 3, further comprising a current supply member (90) and a measurement member (95) for measuring pressure inside the rechargeable battery (100).

5. The rechargeable battery (100) as claimed in claim 4, wherein the measurement member (95) is a pressure sensor positioned inside the rechargeable battery (100).

6. The rechargeable battery (100) as claimed in claim 4 or 5, wherein the measurement member (95) is a battery management system (1000).

7. The rechargeable battery (100) as claimed in any one of the claims 4 to 6, wherein the pressure at which the blocking member (80) reversibly opens the electrolyte inlet (32) is 4 kgf/cm² or more.

8. The rechargeable battery (100) as claimed in any one of the claims 4 to 7, wherein the electrolyte inlet (32) is reversibly opened by applying current from the current supply member (90) to the solenoid valve (84, 85).

9. The rechargeable battery (100) as claimed in any one of the claims 4 to 8, wherein the pressure at which the blocking member (80) non-forcibly opens the electrolyte inlet (32) is 4 kgf/cm² to 20 kgf/cm²;
wherein preferably the pressure at which the blocking member (80) forcibly opens the electrolyte inlet (32) is greater than 20 kgf/cm².

10. The rechargeable battery (100) as claimed in any one of the claims 4 to 9, wherein the pressure at which the blocking member (80) reversibly closes the electrolyte inlet (32) is less than 4 kgf/cm².

11. The rechargeable battery (100) as claimed in claim 10, wherein the current supply member (90) does not apply current to the solenoid valve (84, 85).

12. The rechargeable battery (100) as claimed in claim 10 o 11, wherein the current supply member (90) applies current to the solenoid valve (84, 85).

13. The rechargeable battery (100) as claimed in any one of the preceding claims, wherein the case (20) has a hexahedral shape.

14. A rechargeable battery (100) electrolyte inlet (32) opening and closing system comprising:
a rechargeable battery (100) comprising a blocking member (80) configured to open and close an electrolyte inlet (32) through a solenoid valve (84, 85);
a measurement member (95) configured to measure pressure inside the rechargeable battery (100); and
a current supply member (90) connected to the blocking member (80) and configured to apply current to the solenoid valve (84, 85) according to the pressure measured by the measurement member (95).

15. The rechargeable battery (100) electrolyte inlet (32) opening and closing system as claimed in claim 14, wherein the blocking member (80) is configured to reversibly open the electrolyte inlet (32) at a pressure of 4 kgf/cm² or more;
wherein preferably the blocking member (80) is configured to reversibly close the electrolyte inlet (32) at a pressure of less than 4 kgf/cm².
